# EUROPÄISCHE PATENTSCHRIFT

(11) **EP 3 857 034 B1**
(45) Veröffentlichungstag und Bekanntmachung des Hinweises auf die Patenterteilung: **09.12.2026**
(21) Anmeldenummer: 19779441.5
(22) Anmeldetag: 25.09.2019
(51) Int. Cl.: F01N 3/28, F01N 3/20, B01F 25/32, B01F 25/313, B01F 23/213, B01F 25/10

(54) **VORRICHTUNG ZUM ZUMISCHEN EINES FLÜSSIGEN REDUKTIONSMITTELS ZUM ABGAS EINER BRENNKRAFTMASCHINE UND KRAFTFAHRZEUG**
APPARATUS FOR ADDING A LIQUID REDUCING AGENT TO THE EXHAUST GAS FROM AN INTERNAL COMBUSTION ENGINE AND MOTOR VEHICLE
DISPOSITIF PERMETTANT D'AJOUTER UN AGENT DE RÉDUCTION LIQUIDE AU GAZ D'ÉCHAPPEMENT D'UN MOTEUR À COMBUSTION INTERNE ET VÉHICULE AUTOMOBILE

(30) Priorität: 28.09.2018 DE 102018124025
(43) Veröffentlichungstag der Anmeldung: 04.08.2021
(73) Patentinhaber: MAN Truck & Bus SE, 80995 München (DE)
(72) Erfinder: ALBERT, Herbert, 91056 Erlangen (DE); ARFAOUI, Ghaith, 90443 Nürnberg (DE)
(74) Vertreter: v. Bezold & Partner Patentanwälte - PartG mbB
(86) Internationale Anmeldenummer: PCT/EP2019/075895
(87) Internationale Veröffentlichungsnummer: WO 2020/064853

(56) Entgegenhaltungen:
- EP-A1- 3 067 529
- DE-A1- 102016 004 333
- DE-B4- 112012 000 021
- DE-T5- 112015 001 958
- US-A1- 2014 230 411
- US-A1- 2014 298 781

## Beschreibung

Die Erfindung betrifft eine Vorrichtung zum Zumischen eines flüssigen Reduktionsmittels, vorzugsweise einer wässrigen Harnstofflösung, zum Abgas einer Brennkraftmaschine. Ferner betrifft die Erfindung ein Kraftfahrzeug, vorzugsweise ein Nutzfahrzeug, mit einer entsprechenden Vorrichtung.

Um den Anteil an Stickoxiden aus dem Abgas von Brennkraftmaschinen, insbesondere DieselBrennkraftmaschinen, zu reduzieren, hat sich im Nutzfahrzeugbereich das Verfahren der selektiven katalytischen Reduktion (SCR) bewährt. Hierbei wird dem Abgas zunächst Ammoniak oder eine im Abgasstrom Ammoniak freisetzende Substanz, beispielsweise wässrige Harnstofflösung, als Reduktionsmittel zugegeben, das anschließend im SCR-Katalysator mit dem im Abgas vorhandenen Stickoxiden zu unschädlichen Produkten (vorwiegend Stickstoff und Wasser) reagiert. Um dabei einerseits eine hohe Umsatzrate der Reaktion zu erreichen und andererseits Ablagerungen des Reduktionsmittels im Abgastrakt zu vermeiden, ist es hierbei von Vorteil das Reduktionsmittel möglichst gleichmäßig im Abgas zu verteilen. Entsprechend sind in diesem Zusammenhang im Stand der Technik verschiedene Misch- bzw. Verwirbelungsvorrichtungen bekannt, die im Abgasstrang, vorzugsweise im Bereich des Reduktionsmitteleinlasses, angeordnet werden und eine möglichst gute Durchmischung von Abgas und Reduktionsmittel bewirken sollen.

So offenbart beispielsweise die DE 11 2012 000 035 T5 eine derartige Verwirbelungsvorrichtung zur Abgasnachbehandlung einer Antriebs- bzw. Brennkraftmaschine, umfassend ein einem Injektor zum Eindüsen eines Reduktionsmittels nachgeordnetes Mischrohr, das umfangseitig in Teilbereichen mit einer großflächigen Perforation versehen ist. Während des Betriebs der Brennkraftmaschine kann Abgas über die am Rohrmantel vorhandene Perforation in das Mischrohr eintreten und im Inneren eine spiralförmige Strömung ausbilden, die die Vermischung von Abgas mit dem ins Mischrohr eingespritzten Reduktionsmittel begünstigen soll.

Dokument US 2014/0298781 A1 offenbart einen Mischer zur Verwendung in einem Flüssigkeitseinspritzsystem. Der Mischer kann mindestens einen Boden aufweisen, der sich zwischen einer ersten und einer zweiten Seitenwand und im Allgemeinen parallel zur Strömungsrichtung erstreckt. Der mindestens eine Boden weist eine Vielzahl von Leitschaufeln auf, die in Richtung eines Einspritzbodens und von diesem weg vorstehen und das Mischen eines eingespritzten Fluids fördern.

Dokument US 2014/0230411 A1 offenbart eine Dosier- und Mischanordnung zur Verwendung in der Abgasnachbehandlung umfassend ein Verfahren, um den Abgasstrom zu veranlassen, um mindestens 270 Grad in einer ersten Richtung um ein perforiertes Rohr zu strömen, unter Verwendung einer Prallplatte, die einen Hauptkörper mit einer Vielzahl von Durchflussöffnungen und einer Vielzahl von Lamellen aufweist, die neben den Durchflussöffnungen angeordnet sind.

Dokument EP3067529 A1 offenbart eine, als Hohlzylinder um eine Längsachse ausgebildete und stromab einer Dosiereinrichtung für ein Additiv angeordnete, Mischeinrichtung in einer Abgasnachbehandlungsvorrichtung, welche Leitelemente aufweist, die Abgasseintrittsöffnungen im Inneren des Hohlzylinders teilweise beabstandet überdecken.

Nachteilig an den bisherigen Lösungen ist allerdings, dass die sich im Inneren des Mischrohrs ausbildende Strömung stark von der äußeren Anströmung des Mischrohrs bzw. von der Geometrie des das Mischrohr umgebenden Abgastrakts beeinflusst wird. Entsprechend können sich je nach Betriebspunkt der Brennkraftmaschine unterschiedliche und oftmals asymmetrische Strömungsverteilungen im Mischrohr ausbilden. Dies kann dann wiederum in strömungsberuhigten Bereichen zu einer unerwünschten Ablagerung von Reduktionsmittel führen. Ferner kann eine ungleichmäßige Durchströmung des Mischrohrs auch in einer inhomogenen Erwärmung des Mischrohrs resultieren, was das Ausbilden von kalten Wandungsbereichen begünstigt, die dann als Kältefallen für das Reduktionsmittel wirken können.

Entsprechend ist es Aufgabe der Erfindung eine Vorrichtung zum Zumischen eines flüssigen Reduktionsmittels zum Abgas einer Brennkraftmaschine bereitzustellen, mit der die Nachteile der bisherigen Lösungen vermieden werden können. Insbesondere ist es eine Aufgabe der Erfindung, eine entsprechende Vorrichtung bereitzustellen, die unabhängig von der Anströmung mit Abgas und/oder dem Betriebspunkt der Abgas erzeugenden Brennkraftmaschine eine möglichst homogene Durchmischung bewirken kann und dadurch ein Ablagern von Reduktionsmittel im Abgastrakt vermeidet.

Diese Aufgaben werden erfindungsgemäß durch eine Vorrichtung sowie ein Kraftfahrzeug mit den Merkmalen der unabhängigen Ansprüche gelöst. Vorteilhafte Ausführungsformen und Anwendungen der Erfindung sind Gegenstand der unabhängigen Ansprüche und werden in der folgenden Beschreibung unter teilweiser Bezugnahme auf die Figuren näher erläutert.

Die erfindungsgemäße Vorrichtung zum Zumischen eines flüssigen Reduktionsmittels zum Abgas einer Brennkraftmaschine umfasst in an sich bekannter Weise eine in einem Abgastrakt der Brennkraftmaschine angeordnete Dosiereinrichtung, die eingerichtet ist, mittels eines Injektors, beispielsweise in Form einer Strahldüse, einen - vorzugsweise rotationssymmetrischen - Reduktionsmittelsprühstrahl zu erzeugen. Bei dem flüssigen Reduktionsmittel kann es sich um reinen wasserfreien Ammoniak, wässrigen Ammoniak, eine wässrige Lösung einer Ammoniakvorläufersubstanz (z. B. Harnstoff, Guanidiniumformiat, Ammoniumcarbamat und/oder Ammoniumformiat) und/oder eine sonstige als Reduktionsmittel für die SCR-Katalyse geeignete Flüssigkeit handeln.

Weiterhin umfasst die Vorrichtung - ebenfalls in an sich bekannter Weise - eine als Hohlkörper, vorzugsweise als Hohlzylinder und/oder Hohlkegelstumpf, um eine Längsachse ausgebildete Drall-Erzeugungseinrichtung, die ein dem Injektor zugewandtes erstes Ende und ein dem Injektor abgewandtes zweites Ende aufweist. Mit Hilfe der Drall-Erzeugungseinrichtung, welche auch als Drallbeaufschlagungseinrichtung oder als Verwirbelungseinrichtung bezeichnet werden kann, kann das Abgas bzw. ein Abgasstrom mit einem Drall beaufschlagt werden. Vorzugsweise ist die Drall-Erzeugungseinrichtung dabei dem Injektor nachgeordnet und/oder derart angeordnet, dass der Injektor den Reduktionsmittelsprühstrahl ins Innere der Drall-Erzeugungseinrichtung sprühen kann.

Die Mantelfläche bzw. der Mantel der als Hohlkörper ausgebildeten Drall-Erzeugungseinrichtung umfasst ferner mindestens eine sich im Wesentlichen in Längsrichtung erstreckende Abgaseintrittsöffnung und ein angrenzend zu der Abgaseintrittsöffnung angebrachtes und die Abgaseintrittsöffnung im Inneren der Drall-Erzeugungseinrichtung zumindest teilweise beabstandet überdeckendes Leitelement zur Umlenkung eines Abgasstroms. Das Leitelement kann in diesem Zusammenhang auch als Leitblech, Prallwand, Drallerzeuger, Rippe, Lippe und/oder Kieme bezeichnet werden und kann als ein der Abgaseintrittsöffnung zugehöriges bzw. zugeordnetes Bauteil verstanden werden, d. h., Abgaseintrittsöffnung und Leitelement können als eine funktional zusammenwirkende Einheit aufgefasst werden.

Erfindungsgemäß ist nun vorgesehen, dass das Leitelement in Richtung des ersten Endes der Drall-Erzeugungseinrichtung, z. B. mittels einer Wandung oder Verbindung zur Mantelfläche, geschlossen und in Richtung des zweiten Endes der Drall-Erzeugungseinrichtung geöffnet ist. Die Ausdrücke *"geöffnet"* bzw. *"geschlossen"* können dabei so verstanden werden, dass ein Durchtritt von Abgas durch die Abgaseintrittsöffnung aus oder in der entsprechenden Richtung im Wesentlichen möglich bzw. nicht möglich ist. Durch diese Gestaltung des Leitelements und im Zusammenwirken mit der Abgaseintrittsöffnung wird so beim Eintritt des Abgasstroms durch die Abgaseintrittsöffnung ins Innere der Drall-Erzeugungseinrichtung auf vorteilhafte Weise ein im Wesentlichen tangential und/oder in Richtung des zweiten Endes der Drall-Erzeugungseinrichtung gerichteter homogener Abgasstrom erzeugt, der möglichst unbeeinflusst von der äußeren Anströmung mit Abgas und/oder dem Betriebspunkt der Brennkraftmaschine ist.. Vorzugsweise erzeugt die Drall-Erzeugungseinrichtung einen symmetrischen Drall um die Längsachse. Besonders bevorzugt bleibt dabei die Symmetrie des Dralls über die gesamte Länge der Drall-Erzeugungseinrichtung, d. h. auch weiter stromab, konstant erhalten. Dies begünstigt auf vorteilhafte Weise die gleichmäßige Ausbreitung und Verdampfung sowie die Vermischung von Abgas und Reduktionsmittel und verhindert gleichzeitig Reduktionsmittelablagerungen.

Gemäß einem ersten Aspekt der Erfindung kann das, vorzugsweise freitragende, Leitelement dabei nur entlang einem Längsrand und einen dem ersten Endes der Drall-Erzeugungseinrichtung zugewandten Querrand der Abgaseintrittsöffnung mit der Mantelfläche in Verbindung stehen, um so bei einem Eintritt des Abgasstroms durch die Abgaseintrittsöffnung ins Innere der Drall-Erzeugungseinrichtung dort - d. h. im Inneren der Drall-Erzeugungseinrichtung - einen im Wesentlichen tangential und/oder in Richtung des zweiten Endes der Drall-Erzeugungseinrichtung gerichteten Abgasstrom zu erzeugen. Der Ausdruck *"Längsrand'* kann dabei als ein sich im Wesentlichen entlang der Längsrichtung erstreckender Rand der Abgaseintrittsöffnung und der Ausdruck *"Querrand'* als ein sich im Wesentlichen entlang der Umfangsrichtung erstreckender Rand der Abgaseintrittsöffnung aufgefasst werden. Entsprechend kann das Leitelement in diesem Zusammenhang auch als zweiseitig befestigte Überdachung und/oder als zweiseitig offene Haube bezeichnet werden. Vorzugsweise weist der Verbindungsbereich zwischen Leitelement und Mantelfläche dabei im Wesentlichen eine L-förmige Form auf. Der Vorteil dieses Aspektes liegt darin, dass dadurch auf einfache Weise im Inneren der Drall-Erzeugungseinrichtung eine für die Vermischung von Abgas und Reduktionsmittel günstige Strömung erzeugt werden kann, die Reduktionsmittelablagerungen möglichst vermeidet.

Das Leitelement umfasst ferner einen ersten Wandungsbereich, der die Abgaseintrittsöffnung zumindest teilweise, vorzugsweise vollständig, beabstandet überdeckt und/oder beabstandet überdacht. Hierbei können die Ausdrücke *"überdecken"* bzw. *"überdachen"* so verstanden werden, dass durch den ersten Wandungsbereich eine direkte Sichtlinie in radialer Richtung von der Längsachse der Drall-Erzeugungseinrichtung auf die Abgaseintrittsöffnung verhindert wird. Entsprechend kann dadurch ein Einströmen des Abgasstroms in die Drall-Erzeugungseinrichtung in radialer Richtung unterbunden werden, was auf vorteilhafte Weise im Inneren der Drall-Erzeugungseinrichtung zur Ausbildung einer im Wesentlichen im Umfangsrichtung bzw. tangential gerichteten Strömung führt. Weiterhin umfasst das Leitelement einen zweiten Wandungsbereich, der den ersten Wandungsbereich in Richtung des ersten Endes der Drall-Erzeugungseinrichtung mit der Mantelfläche verbindet und dadurch das Leitelement in dieser Richtung verschließt. Vorzugsweise erfolgt dabei das Verschließen im Wesentlichen in axialer Richtung der Drall-Erzeugungseinrichtung. Auf vorteilhafte Weise wird dadurch ein Zurückströmen des eintretenden Abgasgasstroms in Richtung des Injektors und damit ein mögliches Ansammeln von Reduktionsmittel im Bereich der Dosiereinrichtung weitestgehend unterbunden. Darüber hinaus wird auf vorteilhafte Weise auch ein Herausschleudern des Reduktionsmittels in radialer Richtung aus der Drall-Erzeugungseinrichtung verhindert. Neben dem Verschließen des Leitelements in axialer Richtung kann der zweite Wandungsbereich ferner allerdings auch die Abgaseintrittsöffnung zumindest teilweise beabstandet überdecken.

Gemäß einer Weiterbildung kann der zweite Wandungsbereich eine Krümmung und/oder eine Biegung aufweisen. Zudem oder alternativ kann sich der zweite Wandungsbereich auch an den ersten Wandungsbereich in einem Winkel ungleich 90° anschließen. Durch diese Merkmale wird auf vorteilhafte Weise sichergestellt, dass im Übergangsbereich zwischen ersten und zweiten Wandungsbereich keine scharfkantigen Ecken und/oder strömungsberuhigte Senken auftreten, die eine die Funktion der Drall-Erzeugungseinrichtung beeinträchtigende Ansammlung von Reduktionsmittel bewirken könnten. Vorzugsweise kann der zweite Wandungsbereich dabei eine Form eines Teilbogens und/oder ausgehend von seiner Befestigungsstelle an der Mantelfläche eine dem Injektor abgewandte Krümmung aufweisen.

Erfindungsgemäß weist der erste Wandungsbereich einen dem Injektor zugewandten ersten Längsabschnitt und einen dem Injektor abgewandten zweiten Längsabschnitt auf, wobei der erste Längsabschnitt in radialer Richtung, vorzugsweise durch eine Abstufung des ersten Wandungsbereichs, einen größeren Abstand zur Längsachse der Drall-Erzeugungseinrichtung aufweist. Mit anderen Worten umfasst der erste Wandungsbereich in Längsrichtung mindestens eine Stufung. Vorzugsweise ist die die beiden Längsabschnitte verbindende Abstufung bzw. Stufung dabei verrundet und/oder *"weich",* d. h. ohne scharfkantige Ecken, ausgebildet. Der Vorteil der Abstufung des ersten Wandungsbereichs liegt darin, dass dadurch im Bereich des ersten Endes der Drall-Erzeugungseinrichtung, d. h. in Injektornähe, hohe Drall- bzw. Schleuderkräfte auf den Reduktionsmittelsprühstrahl vermieden werden können und dadurch das Risiko einer Reduktionsmittelablagerung gesenkt werden kann.

Gemäß einer Weiterbildung dieses Aspekts kann eine in Längsrichtung gemessene Länge des ersten Längsabschnitts kürzer als eine in Längsrichtung gemessene Länge des zweiten Längsabschnitts sein. Anders ausgedrückt kann der erste Längsabschnitt eine kürzere Längsausdehnung als der zweite Längsabschnitt aufweisen. Vorzugsweise ist dabei die Länge des ersten Längsabschnitts weniger als halb so lang, besonders bevorzugt weniger als ein Drittel so lang, wie die Länge des zweiten Längsabschnitts. Auf vorteilhafte Weise kann auch dieser Aspekt zur Verminderung von Schleuderkräften in Injektornähe und damit zur Reduzierung des Risikos einer Reduktionsmittelablagerung beitragen.

Nach einem weiteren Aspekt der Erfindung kann das Leitelement zwischen dem ersten und zweiten Längsabschnitt zwei oder mehrere, vorzugsweise verrundete, Abstufungen umfassen. Dabei können die einzelnen Abstufungen im Wesentlichen gleich und/oder unterschiedliche ausgeführt sein. Zudem oder alternativ kann das Leitelement zwischen dem ersten und zweiten Längsabschnitt auch noch weitere Längsabschnitte umfassen, die in radialer Richtung einen Abstand zur Längsachse der Drall-Erzeugungseinrichtung aufweisen, der sich vom Abstand des ersten und zweiten Längsabschnitts unterscheidet. D. h., mit anderen Worten kann das Leitelement in Längsrichtung mehrfach gestuft sein, wobei die in Längsrichtung gemessene Länge der einzelnen Längsabschnitte - inklusive der des ersten und zweiten Längsabschnitts - unterschiedlich gewählt werden kann. Der Vorteil dieses Aspekts liegt darin, dass dadurch in Längsrichtung insgesamt ein *"weicher"* Übergang bzw. Verlauf des Leitelements erreicht werden kann, bei dem plötzliche Änderungen des radialen Abstandes, die ein Anlagern von Reduktionsmittel begünstigen, vermieden werden.

Weiterhin kann - gemäß einem weiteren Aspekt der Erfindung - der erste Wandungsbereich des Leitelements einen gekrümmten ersten Querabschnitt, der mit der Mantelfläche in Verbindung steht und einen an den ersten Querabschnitt anschließenden, im Wesentlichen geraden zweiten Querabschnitt umfassen. Vorzugsweise ist dabei der erste Querabschnitt an einem Randbereich der Abgaseintrittsöffnung angeformt und/oder in Form eines Teilbogens ausgeführt. Der Ausdruck *"Querabschnitt"* kann dabei als ein sich im Wesentlichen senkrecht zur Längsrichtung erstreckender Abschnitt des ersten Wandungsbereich verstanden werden. Mit anderen Worten kann somit auch der Querschnitt des ersten Wandungsbereichs senkrecht zur Längsrichtung den ersten und zweiten Querabschnitt mit den oben genannten Merkmalen umfassen. Auf vorteilhafte Weise wird dadurch ein einfaches und wirksames Leit- bzw. Drallelement bereitgestellt, das beim Anströmen der Drall-Erzeugungseinrichtung mit Abgas in deren Inneren zur Ausbildung einer im Wesentlichen im Umfangsrichtung gerichteten Strömung führen kann, die Reduktionsmittelablagerungen verhindert.

Nach einer Weiterbildung kann dabei der zweite Querabschnitt des Leitelements mit einer Tangente der Mantelfläche, die durch einen Punkt der dem Leitelement zugehörigen Abgaseintrittsöffnung und einer Ebene senkrecht zur Längsrichtung verläuft, einen Winkel zwischen -10° und 30° einschließen. Vorzugsweise können der zweite Querabschnitt und die Tangente dabei einen Winkel von 0° einschließen, d. h., der zweite Querabschnitt ist im Wesentlichen parallel zu einem Querabschnitt der Abgaseintrittsöffnung orientiert. Ausgehend von einer im Wesentlichen parallelen Orientierung bezeichnen positive Winkel hierbei eine Neigung des zweiten Querabschnitts in Richtung Längsachse - d. h. Zentrum - der Drall-Erzeugungseinrichtung und negative Winkel eine Neigung in Richtung der zugehörigen Abgaseintrittsöffnung.

Auf vorteilhafte Weise kann der tangentiale Anteil der Abgasströmung im Inneren der Drall-Erzeugungseinrichtung zuverlässig eingestellt werden.

Gemäß einem weiteren Aspekt kann das Leitelement die Abgaseintrittsöffnung in radialer Richtung derart überdecken, dass ausgehend von der Längsachse der Drall-Erzeugungseinrichtung in radialer Richtung keine direkte Sichtlinie durch die Abgaseintrittsöffnung nach außen besteht. Zudem oder alternativ kann eine in Umfangsrichtung gemessene Breite des Leitelements größer als eine in Umfangsrichtung gemessene Breite der zugehörigen Abgaseintrittsöffnung sein, so dass das Leitelement in Umfangsrichtung über die Abgaseintrittsöffnung hinausragt. Anders ausgedrückt kann das Leitelement damit nicht nur eine direkte Sichtlinie in radialer Richtung von der Längsachse der Drall-Erzeugungseinrichtung auf die Abgaseintrittsöffnung verhindern, sondern verdeckt in radialer Richtung zudem auch noch Teile der Mantelfläche. Dieser Überstand, d. h., die Ausdehnung des über die Abgaseintrittsöffnung hinausragenden Teils des Leitelements kann dabei vorzugsweise bis zu einem Drittel der Breite des Leitelements betragen. Auf vorteilhafte Weise wird dadurch ein Einströmen von Abgas in radialer Richtung weitestgehend unterbunden, was im Inneren der Drall-Erzeugungseinrichtung zur Ausbildung eines im Wesentlichen tangential und/oder in Richtung des zweiten Endes der Drall-Erzeugungseinrichtung gerichteten homogenen Abgasstroms führt, der möglichst unbeeinflusst von der äußeren Anströmung mit Abgas und/oder dem Betriebspunkt der Brennkraftmaschine ist. Dies begünstigt auf vorteilhafte Weise die Vermischung von Abgas und Reduktionsmittel und verhindert gleichzeitig Reduktionsmittelablagerungen.

Ferner kann - nach einem weiteren Aspekt der Erfindung - die Vorrichtung zum Zumischen eines flüssigen Reduktionsmittels zum Abgas einer Brennkraftmaschine eine im Bereich des Injektors angeordnete und als Hohlkörper, vorzugsweise als Kegelstumpf, ausgebildete Schutzeinrichtung zur Reduzierung einer Abgasströmung im Bereich des Reduktionsmittelsprühstrahls umfassen, wobei die Mantelfläche der Schutzeinrichtung eine, vorzugsweise aus Rundlöchern gebildete, Perforierung aufweist. Der Ausdruck *"Perforierung"* kann dabei gleichmäßig umfangseitig verteilte Öffnungen bezeichnen, wobei diese beispielsweise auch als Langlöcher ausgebildet sein können. Vorzugsweise ist die Schutzeinrichtung im Inneren der Drall-Erzeugungseinrichtung, besonders bevorzugt im Inneren und in einem Bereich des ersten Endes der Drall-Erzeugungseinrichtung, angeordnet. Ferner kann die Schutzeinrichtung als ein sich kegelförmig in Richtung des zweiten Endes der Drall-Erzeugungseinrichtung aufweitendes Trichterelement ausgebildet sein. Auf vorteilhafte Weise kann durch die Schutzeinrichtung im Nahbereich des Injektors eine übermäßige Schleuderwirkung auf den Reduktionsmittelsprühstrahl verhindert, und damit das Risiko der Entstehung von Reduktionsmittelablagerungen reduziert werden.

Gemäß einem weiteren Aspekt der Erfindung kann die Vorrichtung ferner ein an das zweite Ende der Drall-Erzeugungseinrichtung anschließendes Innenrohr, ein das Innenrohr umgebendes Außenrohr und mindestens einen zwischen dem Innen- und Außenrohr angeordneten Strömungswiderstand zur Regulierung des Abgasdurchflusses in dem Bereich zwischen Innen und Außenrohr umfassen. Dabei kann das Innenrohr und/oder das Außenrohr einen kreisrunden Querschnitt aufweisen. Auf vorteilhafte Weise wird durch die eben beschriebene Anordnung ein Bypass realisiert, mittels dem ein Teil des Abgasstroms an der Drall-Erzeugungseinrichtung vorbeigeleitet werden kann. Dadurch kann auf vorteilhafte Weise der in die Drall-Erzeugungseinrichtung eintretende Abgasstrom reguliert werden und das Auftreten starker Schleuderkräfte im Inneren der Drall-Erzeugungseinrichtung, die die ordnungsgemäße Funktion beeinträchtigen würden, vermieden werden.

Nach einer Weiterbildung des vorgenannten Aspekts kann der Strömungswiderstand durch eine Verkleinerung des Leitungsquerschnitts zwischen Innen- und Außenrohr, vorzugsweise durch eine Verjüngung des Außenrohrs gebildet werden. Dies ermöglicht auf einfache Weise - ohne die Verwendung weiterer Bauteile - einen Strömungswiderstand zu realisieren. Zudem oder alternativ kann der Strömungswiderstand auch durch eine, vorzugsweise ringförmige, Mehrlochblende gebildet werden. Deren Strömungswiderstand kann dabei fest oder variabel sein. Beispielsweise kann im letzteren Fall eine Lochgröße und/oder eine Lochanzahl einstellbar sein. Dies erlaubt auf vorteilhafte Weise den an der Drall-Erzeugungseinrichtung vorbeigeleiteten Abgasstrom - z. B. in Abhängigkeit des Motorbetriebspunkts - zu variieren, wodurch im Inneren der Drall-Erzeugungseinrichtung auch bei unterschiedlichen Betriebsbedingungen möglichst konstante Strömungsverhältnisse erzielt werden können.

Gemäß einem weiteren Aspekt kann das Außenrohr in axialer Richtung eine längere Ausdehnung als das Innenrohr aufweisen sowie in einem Bereich, in dem das Außenrohr das Innenrohr nicht umgibt eine, vorzugsweise düsenähnliche, Einschnürung aufweisen. Als *"Einschnürung"* kann dabei eine lokale Verkleinerung des Strömungsquerschnitts bzw. Rohrquerschnitts verstanden werden. Vorzugsweise kann das Außenrohr dabei auf einer dem Injektor abgewandten Endbereich die Einschnürung aufweisen. Auf vorteilhafte Weise kann dadurch eine Homogenisierung der Reduktionsmittelverteilung über den Rohrquerschnitt erreicht werden, die ansonsten aufgrund der Abdampfung des Reduktionsmittels vom Innenrohr ringförmig überhöht wäre.

Ferner wird erfindungsgemäß auch ein Kraftfahrzeug, vorzugsweise Nutzfahrzeug, mit einer Brennkraftmaschine, vorzugsweise einer Diesel-Brennkraftmaschine, sowie einer Vorrichtung zum Zumischen eines flüssigen Reduktionsmittels zum Abgas der Brennkraftmaschine, wie in diesem Dokument beschrieben, bereitgestellt. Bei dem flüssigen Reduktionsmittel kann es sich hierbei um reinen wasserfreien Ammoniak, wässrigen Ammoniak, eine wässrige Lösung einer Ammoniakvorläufersubstanz (z. B. Harnstoff, Guanidiniumformiat, Ammoniumcarbamat und/oder Ammoniumformiat) und/oder eine sonstige als Reduktionsmittel für die SCR-Katalyse geeignete Flüssigkeit handeln. Ferner kann das Kraftfahrzeug noch weitere Komponenten darunter einen Abgastrakt, einen Partikelfilter, einen SCR-Katalysator und/oder einen Tank zur Lagerung des Reduktionsmittels inkl. entsprechender Versorgungsleitungen umfassen.

Die zuvor beschrieben Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines Abgastrakts einer Brennkraftmaschine mit einer Vorrichtung zum Zumischen eines flüssigen Reduktionsmittels zum Abgas gemäß einer Ausführungsform der Erfindung;
- Figur 2:: eine 3D-Darstellung einer Drall-Erzeugungseinrichtung gemäß einer Ausführungsform der Erfindung;
- Figur 3:: eine 3D-Schnittdarstellung einer Drall-Erzeugungseinrichtung gemäß einer zweiten Ausführungsform der Erfindung;
- Figur 4:: einen Längsschnitt der in Figur 3 dargestellten zweiten Ausführungsform der Drall-Erzeugungseinrichtung;
- Figur 5:: jeweils einen Teilquerschnitt der Drall-Erzeugungseinrichtung in einer Ebene senkrecht zur Längsachse gemäß zwei Ausführungsformen der Erfindung;
- Figur 6:: eine schematische Darstellung eines Abgastrakts einer Brennkraftmaschine mit einer Vorrichtung zum Zumischen eines flüssigen Reduktionsmittels zum Abgas gemäß einer weiteren Ausführungsform der Erfindung;
- Figur 7:: eine Explosionsdarstellung der in Figur 6 dargestellten Vorrichtung; und
- Figur 8:: eine schematische Darstellung eines Kraftfahrzeugs gemäß einer Ausführungsform der Erfindung.

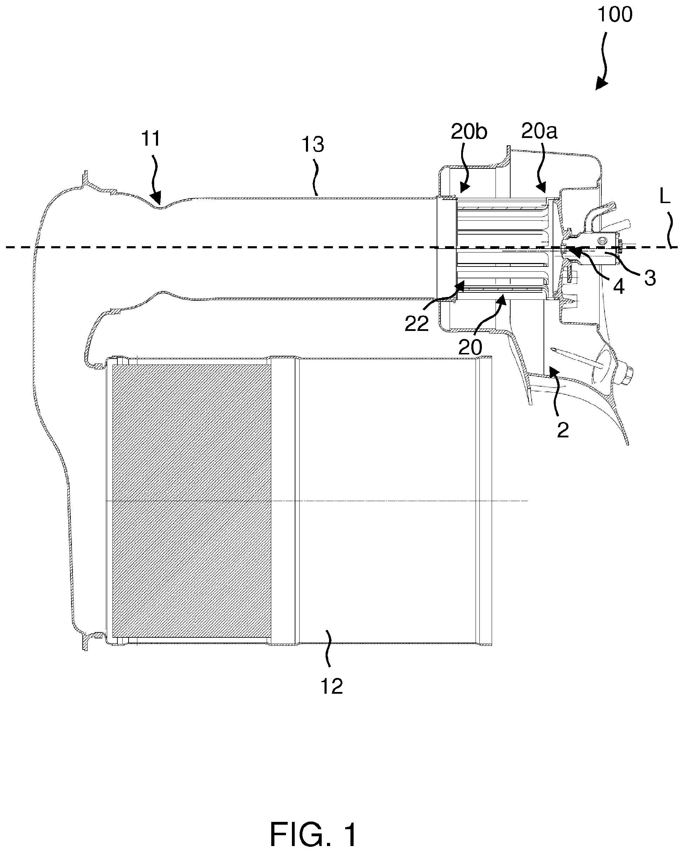

Figur 1 zeigt eine schematische Darstellung eines Abgastrakts 2, d. h. abgasführenden Teile, einer hier nicht näher dargestellten Brennkraftmaschine 1, vorzugsweise einer Diesel-Brennkraftmaschine. Der Abgastrakt 2 weist vorliegend einen SCR-Katalysator 12 und eine im Abgastrakt 2 vor dem SCR-Katalysator 12, d. h. stromauf, angeordnete erfindungsgemäße Vorrichtung 100 zum Zumischen eines flüssigen Reduktionsmittels zum Abgas der Brennkraftmaschine 1 auf. Bei dem flüssigen Reduktionsmittel kann es hierbei beispielweise um eine wässrige Harnstofflösung handeln, die im Abgastrakt hydrolysiert und in Ammoniak umgewandelt wird, der dann zusammen mit dem Abgas dem SCR-Katalysator 12 zugeführt wird.

Die Vorrichtung 100 umfasst dabei eine Dosiereinrichtung 3, die eingerichtet ist, mittels eines Injektors 4, beispielsweise einer Einfachspraydüse oder einer Mehrlochdüse, einen Reduktionsmittelsprühstrahl zu erzeugen. Vorzugsweise wird dabei ein rotationssymmetrischer, beispielsweise kegelförmiger Sprühstrahl, erzeugt. Ferner umfasst die Vorrichtung 100 einen als Hohlzylinder um eine Längsachse L ausgebildete Drall-Erzeugungseinrichtung 20, die eine dem Injektor 4 zugewandtes erstes Ende 20a und ein dem Injektor 4 abgewandtes zweites Ende 20b aufweist. Vorzugsweise ist die Drall-Erzeugungseinrichtung 20 dabei dem Injektor 4 derart nachgeordnet, dass die Längsachse L der Drall-Erzeugungseinrichtung 20 mit der Rotationsachse des vom Injektor 4 erzeugten rotationssymmetrischen Reduktionsmittelsprühstrahls zusammenfällt. Ferner kann der Injektor 4 auch innerhalb der Drall-Erzeugungseinrichtung 20, besonders bevorzugst in einem Bereich des ersten Endes 20a der Drall-Erzeugungseinrichtung 20, angeordnet sein.

Durch die vorliegende Vorrichtung 100 - speziell durch die nachfolgend noch eingehender beschriebene Ausgestaltung der Drall-Erzeugungseinrichtung 20 - kann im Inneren der Drall-Erzeugungseinrichtung 20 eine möglichst tangential und/oder in Richtung des zweiten Endes 20b der Drall-Erzeugungseinrichtung 20 gerichteter homogener Abgasstrom erzeugt werden, der auf vorteilhafte Weise eine möglichst homogene Durchmischung von Reduktionsmittel und Abgas ermöglicht. Zu diesem Zweck ist die Drall-Erzeugungseinrichtung 20 an ihrem ersten Ende 20a mittels einer Wandung verschlossen, die lediglich eine Öffnung zum Eindüsen des Reduktionsmittelsprühstrahls für den Injektor 4 aufweist. An ihrem zweiten Ende 20b mündet die Drall-Erzeugungseinrichtung 20 in ein zum SCR-Katalysator 12 führendes Verbindungsrohr 13. Weiterhin umfasst die Mantelfläche der Drall-Erzeugungseinrichtung 20 mehrere gleichmäßig umfangsseitig verteilte und sich im Wesentlichen in Längsrichtung erstreckende Abgaseintrittsöffnungen 22. Als Mantelfläche - auch Mantel oder Mantelwand genannt - kann dabei der gesamte zwischen Innen- und Außenfläche liegende Bereich des Hohlkörpers verstanden werden. Über die Abgaseintrittsöffnungen 22 kann von der Brennkraftmaschine 1 anströmendes Abgas ins Innere der Drall-Erzeugungseinrichtung 20 eintreten und von dort über das Verbindungsrohr 13 zum SCR-Katalysator 12 strömen.

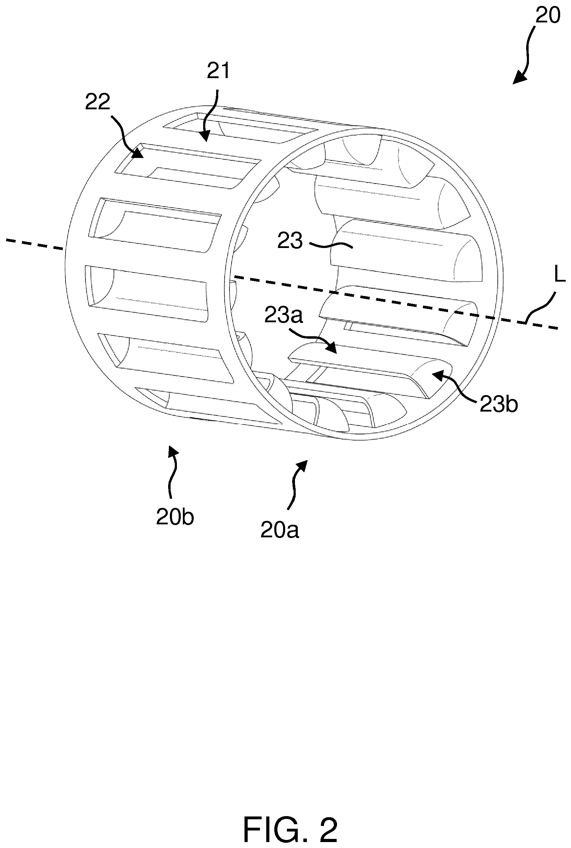

Um beim Eintritt des Abgasstroms in die Drall-Erzeugungseinrichtung 20 die oben genannten vorteilhaften Strömungsverhältnisse zu generieren, umfasst die Drall-Erzeugungseinrichtung 20 angrenzend zu jeder Abgaseintrittsöffnung 22 angebrachte Leitelemente 23 zur Umlenkung des Abgasstroms. Diese sind - zusammen mit der gesamten Drall-Erzeugungseinrichtung 20 - gemäß einer Ausführungsform der Erfindung in einer 3D-Darstellung in Figur 2 dargestellt. Vorliegend weist die hohlzylinderförmige Drall-Erzeugungseinrichtung 20 dabei eine Anzahl von vierzehn gleichmäßig umfangsseitig verteilte und sich im Wesentlichen in Längsrichtung erstreckende rechteckige Abgaseintrittsöffnungen 22 sowie hierzu angrenzende zweiseitig befestigte Leitelemente 23 auf, die die Abgaseintrittsöffnungen 22 im Inneren der Drall-Erzeugungseinrichtung 20 beabstandet nahezu vollständig überdecken bzw. überdachen. Die Leitelemente 23 sind dabei jeweils in Richtung des ersten Endes 20a der Drall-Erzeugungseinrichtung 20, d. h. in Richtung Injektors 4, sowie entlang einem Längsrand der AbgaseintrittsÖffnungen 22 mittels einer Verbindung zur Mantelfläche 21 geschlossen. Entlang dem anderen Längsrand der Abgaseintrittsöffnungen 22 sowie in Richtung des zweiten Endes 20b der Drall-Erzeugungseinrichtung 20 sind die Leitelemente 23 allerdings geöffnet. Der Ausdruck *"geöffnet'* kann dabei so verstanden werden, dass die Stirnseiten des Leitblechs 23 in diesen Richtungen nicht mit der Mantelfläche 21 in Verbindung stehen. Entsprechend kann das Leitelement 23 in diesem Zusammenhang auch als zweiseitig befestigte Überdachung und/oder als zweiseitig offene Haube bezeichnet werden. Bzw. anders ausgedrückt kann das Leitelement somit in Bezug auf die Abgasstromrichtung stromauf geschlossen und stromab geöffnet sein.

Durch diese erfindungsgemäße Ausgestaltung der Leitelemente 23 und im Zusammenwirken mit den jeweiligen Abgaseintrittsöffnungen 22 wird so beim Eintritt des Abgasstroms durch die Abgaseintrittsöffnung 22 ins Innere der Drall-Erzeugungseinrichtung 20 auf vorteilhafte Weise ein im Wesentlichen tangential und/oder in Richtung des zweiten Endes 20b der Drall-Erzeugungseinrichtung 20 gerichteten homogenen Abgasstrom erzeugt, der möglichst unbeeinflusst von der äußeren Anströmung mit Abgas und/oder dem Betriebspunkt der Brennkraftmaschine 1 ist. Dies begünstigt auf vorteilhafte Weise die Vermischung von Abgas und Reduktionsmittel, verhindert Reduktionsmittelablagerungen und gewährleistet außerdem im Wesentlich symmetrisch wirkende Strömungskräfte auf das sich ausbreitende Reduktionsmittel. Dabei ist es für den Fachmann ersichtlich, dass die Drall-Erzeugungseinrichtung 20 natürlich auch mehr oder weniger derartiger funktional zusammenwirkender Einheiten aus Abgaseintrittsöffnung 22 und Leitelement 23 umfassen kann, ohne den Bereich der Erfindung zu verlassen.

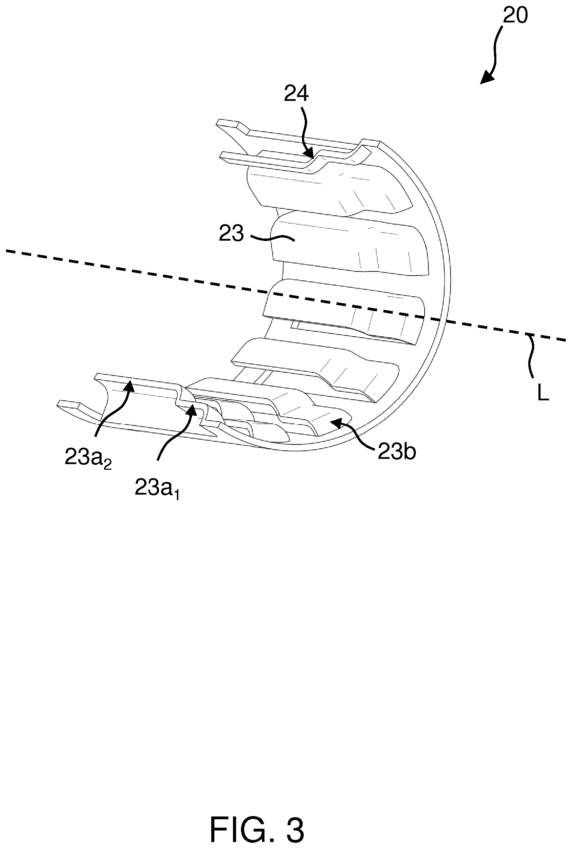

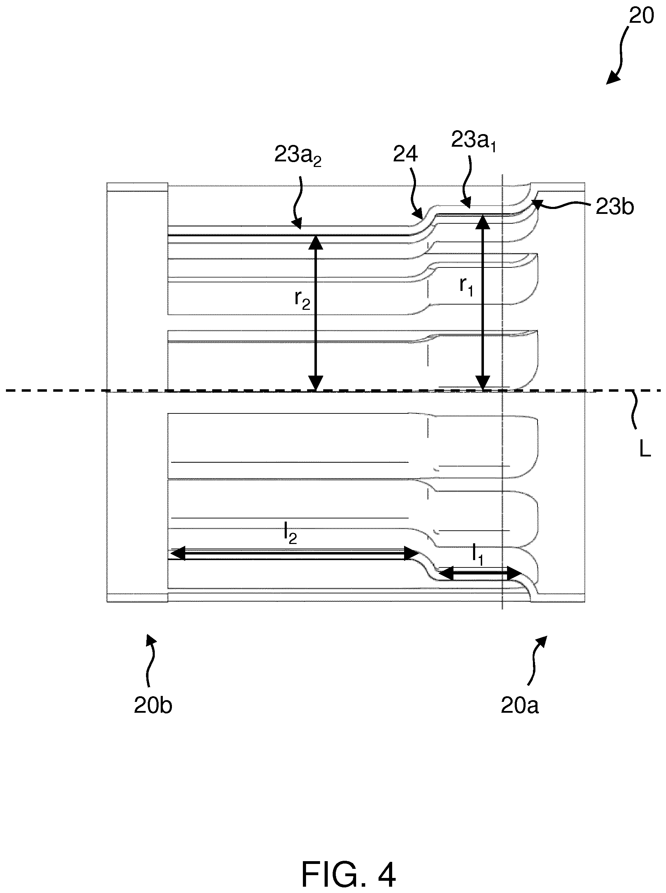

Figur 3 zeigt eine 3D-Schnittdarstellung einer Drall-Erzeugungseinrichtung 20 gemäß einer zweiten Ausführungsform der Erfindung. Auch hier ist die Drall-Erzeugungseinrichtung 20 wiederum als Hohlzylinder mit gleichmäßig umfangsseitig verteilten und sich im Wesentlichen in Längsrichtung erstreckenden rechteckigen Abgaseintrittsöffnungen 22 ausgebildet. Im Vergleich zu der in Figur 2 gezeigten Variante sind erfindungsgemäß die die Abgaseintrittsöffnungen 22 im Inneren der Drall-Erzeugungseinrichtung 20 beabstandet überdeckenden Leitelemente 23 gestuft. D. h., die jeweiligen Leitelemente 23 weisen je einen dem Injektor 4 zugewandten ersten Längsabschnitt 23a₁ und einen dem Injektor 4 abgewandten zweiten Längsabschnitt 23a₂ auf, wobei der erste Längsabschnitt 23a₁ in radialer Richtung jeweils einen größeren Abstand zur Längsachse L der Drall-Erzeugungseinrichtung 20 als der zweite Längsabschnitt 23a₂ aufweist. Diese Ausführung wird nochmals durch den in Figur 4 gezeigten Längsschnitt der zweiten Ausführungsform der Drall-Erzeugungseinrichtung 20 verdeutlicht.

Dabei bezeichnet r₁ den radialen Abstand des ersten Längsabschnitts 23a₁ und r₂ den radialen Abstand des zweiten Längsabschnitts 23a₂ von der Längsachse L. Der Vorteil des größeren radialen Abstands r₁ des ersten Längsabschnitts 23a₁ liegt hier darin, dass dadurch im Bereich des ersten Endes 20a der Drall-Erzeugungseinrichtung 20, und damit in der Nähe des Injektors 4, hohe Drall- bzw. Schleuderkräfte auf den Reduktionsmittelsprühstrahl vermieden werden können und dadurch das Risiko einer Reduktionsmittelablagerung gesenkt werden kann. Ferner zeigt Figur 4, dass der Übergang zwischen dem ersten und zweiten Längsabschnitt 23a₁, 23a₂ - analog zum Übergang 23b zwischen der Mantelfläche 21 und dem ersten Längsabschnitt 23a₁ - in Form einer verrundeten Stufung 24, d. h. ohne scharfkantige Ecken, erfolgt. Dadurch wird auf vorteilhafte Weise sichergestellt, dass auch im Übergangsbereich zwischen ersten und zweiten Wandungsbereich 23a₁, 23a₂ keine strömungsberuhigte Senken auftreten, die eine unerwünschte Ablagerung von Reduktionsmittel begünstigen könnten. Weiterhin verdeutlicht Figur 4, dass eine in Längsrichtung gemessene Länge l₁ des ersten Längsabschnitts 23a₁ kürzer als eine in Längsrichtung gemessene Länge l₂ des zweiten Längsabschnitts 23a₂ ist. Vorliegend beträgt dabei die Länge l₁ ein Drittel der Länge l₂, allerdings ist es für den Fachmann ersichtlich, dass auch beliebige andere Längenverhältnisse zwischen l₁ und l₂ gewählt werden können, ohne den Bereich der Erfindung zu verlassen. Daneben können die Leitelemente 23 jeweils auch noch weitere Stufungen, die im Wesentlichen gleich oder unterschiedliche zur dargestellten Stufung 24 ausgebildet sein können, bzw. weitere Längsabschnitte umfassen.

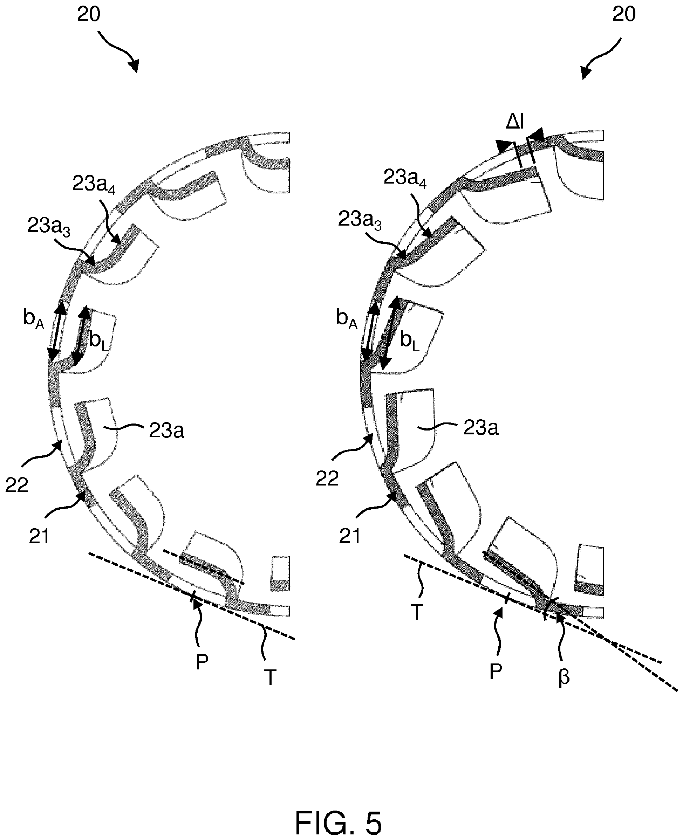

Figur 5 zeigt von zwei Ausführungsformen der Erfindung jeweils einen Teilquerschnitt der Drall-Erzeugungseinrichtung 20 in einer Ebene senkrecht zur Längsachse L. In beiden Fällen umfassen die jeweiligen Leitelemente 23 - genauer gesagt der erste Wandungsbereich 23a der jeweiligen Leitelemente 23 - einen gekrümmten ersten Querabschnitt 23a₃, der mit der Mantelfläche 21 in Verbindung steht, und einen an den ersten Querabschnitt 23a₃ anschließenden, im Wesentlichen geraden zweiten Querabschnitt 23a₄, der die Abgaseintrittsöffnung 22 beabstandet überdeckt. Dabei unterscheiden sich die links und rechts dargestellten Ausführungsformen in der Neigung und Breite der zweiten Querabschnitte 23a₄.

Während im linken Fall der zweite Querabschnitt 23a₄ der jeweiligen Leitelemente 23 im Wesentlichen parallel zu einem Querabschnitt der zugehörigen Abgaseintrittsöffnung 22 orientiert ist, ist im rechten Fall der zweite Querabschnitt 23a₄ ins Innere der Drall-Erzeugungseinrichtung 20, d. h. in Richtung der Längsachse L, geneigt. Diese Neigung lässt sich über eine Tangente T der zugehörigen Abgaseintrittsöffnung 22 auch quantifizieren. Hierzu kann der Winkel β des zweiten Querabschnitts 23a₄ des Leitelements 23 mit einer Tangente T der Mantelfläche 21, die durch einen Punkt P der dem Leitelement 23 zugehörigen Abgaseintrittsöffnung 22 in der entsprechenden Querschnittsebene verläuft, bestimmt werden. Im linken Ausführungsbeispiel ergibt sich dabei aufgrund der Parallelität ein Winkel β von 0°, während im rechten Ausführungsbeispiel ein Winkel β von +13° dargestellt ist. Ein positiver Winkel β kann hierbei eine Neigung des zweiten Querabschnitts 23a₄ in Richtung Längsachse L - d. h. Zentrum - der Drall-Erzeugungseinrichtung 20 und ein negativer Winkel β eine Neigung in Richtung der zugehörigen Abgaseintrittsöffnung 22 bezeichnen. Um auf vorteilhafte Weise den tangentialen Anteil der sich im Inneren bei einem Anströmen der Drall-Erzeugungseinrichtung 20 mit Abgas ausbildenden Abgasströmung zuverlässig einzustellen kann der Winkel β vorzugsweise zwischen -10° und +30° betragen.

Neben der unterschiedlichen Neigung der zweiten Querabschnitte 23a₄ der Leitelemente 23 unterschieden sich die links und rechts dargestellten Ausführungsbeispiele ferner auch noch in ihrer in Umfangsrichtung gemessene Breite b_{L}. Während im linken Fall die Breite b_{L} des Leitelements 23 im Wesentlichen der in Umfangsrichtung gemessenen Breite b_{A} der zugehörigen Abgaseintrittsöffnung 22 entspricht, besitzt im rechten Ausführungsbeispiel das Leitelement 23 eine größere Breite b_{L} als die zugehörige Abgaseintrittsöffnung 22. Entsprechend ragt im rechten Fall der zweiten Querabschnitte 23a₄ der Leitelemente 23 mit dem Überstand Δl über die zugehörige Abgaseintrittsöffnung 22 hinaus. Mit anderen Worten können die jeweiligen Leitelemente 23 damit nicht nur eine direkte Sichtlinie in radialer Richtung von der Längsachse L der Drall-Erzeugungseinrichtung 20 auf die jeweils zugehörige Abgaseintrittsöffnung 22 verhindern (linker Fall), sondern in radialer Richtung zudem auch noch Teile der Mantelfläche 21 verdecken (rechter Fall). Damit wird auf vorteilhafte Weise das Einströmen von Abgas in radialer Richtung weitestgehend unterbunden, was im Inneren der Drall-Erzeugungseinrichtung 20 die Ausbildung eines im Wesentlichen tangential und/oder in Richtung des zweiten Endes 20b der Drall-Erzeugungseinrichtung 20 gerichteten homogenen Abgasstrom induziert.

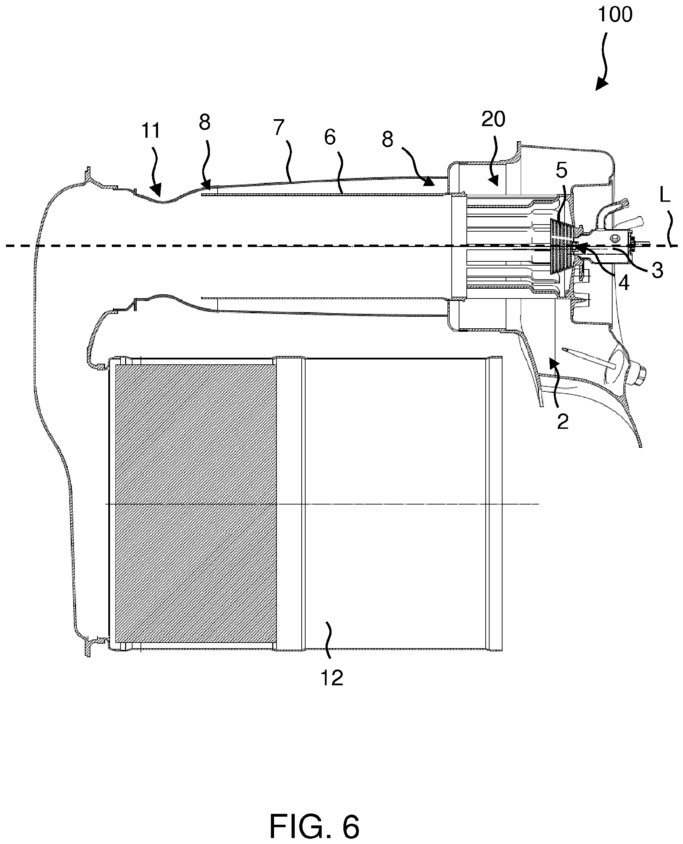

Figur 6 zeigt eine schematische Darstellung eines Abgastrakts 2 einer Brennkraftmaschine 1 mit einer Vorrichtung 100 zum Zumischen eines flüssigen Reduktionsmittels zum Abgas gemäß einer weiteren Ausführungsform der Erfindung. Im Unterschied zu dem in Figur 1 dargestellten Fall umfasst die Vorrichtung 100 dabei eine Drall-Erzeugungseinrichtung 20 mit gestuften Leitelementen 23, wie sie vorgehend im Zuge der Figuren 3 und 4 ausführlich beschrieben wurden. Ferner umfasst die Vorrichtung 100 eine im Bereich des Injektors 4 angeordnete und als perforierter Kegelstumpf ausgebildete Schutzeinrichtung 5 zur Reduzierung einer Abgasströmung im Bereich des Reduktionsmittelsprühstrahls. Neben der vorliegend gezeigten Perforierung in Form von gleichmäßig umfangseitig verteilter Rundlöchern können die Öffnungen bzw. Löcher der Schutzeinrichtung 5 alternativ auch als Langlöcher ausgebildet sein. Ferner können auf der Mantelfläche der Schutzeinrichtung 5 auch zusätzliche Leitelemente, z.B. Stege, angebracht sein, ohne den Bereich der Erfindung zu verlassen. Vorzugsweise ist die Schutzeinrichtung 5 ferner im Inneren der Drall-Erzeugungseinrichtung 20, besonders bevorzugt im Inneren und in einem Bereich des ersten Endes 20a der Drall-Erzeugungseinrichtung 20, angeordnet. Dabei kann die Schutzeinrichtung 5 dem Injektor 4 nachgeordnet und/oder derart angeordnet sein, dass der Injektor 4 den Reduktionsmittelsprühstrahl ins Innere der Schutzeinrichtung 5 sprühen kann. Auf vorteilhafte Weise kann durch die Schutzeinrichtung 5 im Nahbereich des Injektors 4 eine übermäßige Schleuderwirkung auf den Reduktionsmittelsprühstrahl verhindert und damit das Risiko der Entstehung von Reduktionsmittelablagerungen reduziert werden.

Als weiteren Unterschied zu der in Figur 1 gezeigten Ausführungsform weist die in Figur 6 dargestellte Vorrichtung 100 zusätzlich einen Bypass auf, mittels dem ein Teil des Abgasstroms an der Drall-Erzeugungseinrichtung 20 vorbeigeführt werden kann. Dadurch kann auf vorteilhafte Weise der in die Drall-Erzeugungseinrichtung 20 eintretende Abgasstrom reguliert werden und das Auftreten starker Schleuderkräfte im Inneren der Drall-Erzeugungseinrichtung 20, die die ordnungsgemäße Funktion beeinträchtigen würden, vermieden werden. Zur Ausbildung des Bypasses umfasst die Vorrichtung 100 ein an das zweite Ende 20b der Drall-Erzeugungseinrichtung 20 anschließendes Innenrohr 6, das auch als Mischrohr bezeichnet werden kann, und ein das Innenrohr 6 umgebendes Außenrohr 7, das in axialer Richtung eine längere Ausdehnung als das Innenrohr 6 besitzt. Vorliegend weisen dabei sowohl das Innenrohr 6 als auch das Außenrohr 7 einen kreisrunden Querschnitt auf, wobei der Durchmesser des Außenrohres 7 über dessen Länge in Richtung des vom Injektor 4 abgewandten Endes abnimmt. Alternativ können das Innenrohr 6 und Außenrohr 7 allerdings auch einen gleichbleibenden Durchmesser bzw. Querschnitt aufweisen. Insgesamt kann somit das von der Brennkraftmaschine 1 anströmendes Abgas über zwei Wege in Richtung SCR-Katalysator 12 gelangen. Einerseits kann Abgas über die Abgaseintrittsöffnungen 22 ins Innere der Drall-Erzeugungseinrichtung 20 eintreten und von dort durch das Innenrohr 6 strömen, alternativ kann das Abgas auch an der Drall-Erzeugungseinrichtung 20 vorbei und anschließend durch den Bereich zwischen Außen- und Innenrohr 6, 7 strömen.

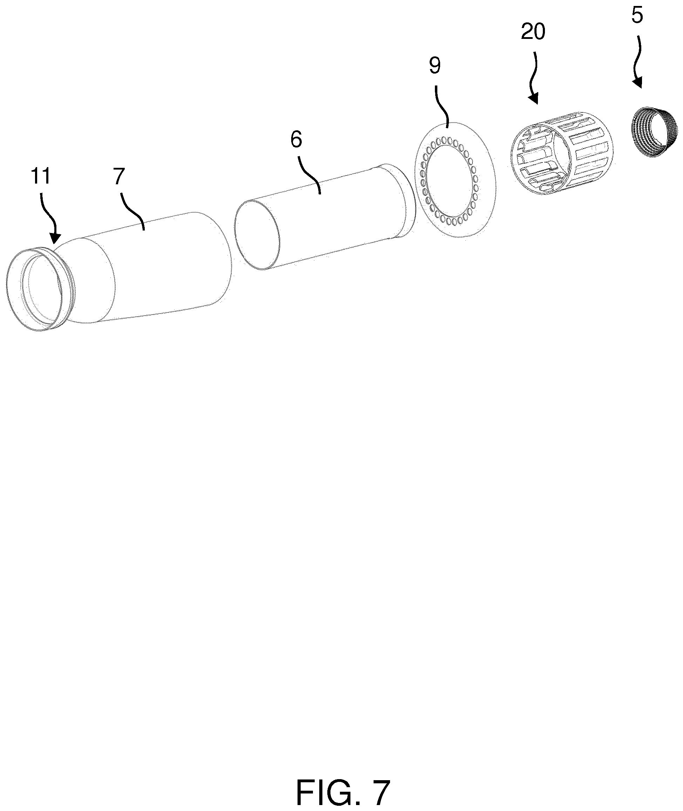

Um dabei den Anteil an Abgas, der durch die Drall-Erzeugungseinrichtung 20 strömt und den Anteil an Abgas, welcher an der Drall-Erzeugungseinrichtung 20 vorbeigeleitet wird, zu regulieren umfasst die Vorrichtung 100 ferner zwei zwischen dem Innen- und Außenrohr 6, 7 angeordnete Strömungswiderstände 8. Einer der beiden Strömungswiderstände 8 wird dabei durch den sich verjüngenden Querschnitt des Außenrohrs 8 gebildet, der andere Strömungswiderstand 8 durch eine ringförmige Mehrlochblende 9, die in der in Figur 7 gezeigten Explosionsdarstellung der Ausführungsform deutlicher erkennbar ist. Neben der Regulierung des sich im Inneren der Drall-Erzeugungseinrichtung 20 ausbildenden Abgasstroms wird durch den zwischen Innen- und Außenrohr 6, 7 geleiteten Abgasstrom ferner auch das Innenrohr 6 homogen erwärmt, was zum Verdampfen von möglicherweise auf das Innenrohr 6 treffendes Reduktionsmittel führt und dadurch ebenfalls einer Anlagerung von Reduktionsmittel vorbeugt. Da sich durch das abdampfende Reduktionsmittel eine ringförmig erhöhte Konzentration über den Rohrquerschnitt ergeben würde, weist das Außenrohr 7 zur Homogenisierung der Reduktionsmittelverteilung in einem dem Injektor 4 abgewandten Endbereich, in dem das Außenrohr 7 das Innenrohr 6 nicht umgibt, eine düsenähnliche Einschnürung 11 auf. Hierdurch wird die Reduktionsmittelverteilung wieder im Rohrzentrum konzentriert, wodurch auf vorteilhafte Weise eine homogenere Verteilung des Reduktionsmittels in den nachfolgenden Abgasstrang und vor allem auf den SCR-Katalysator erzielt wird.

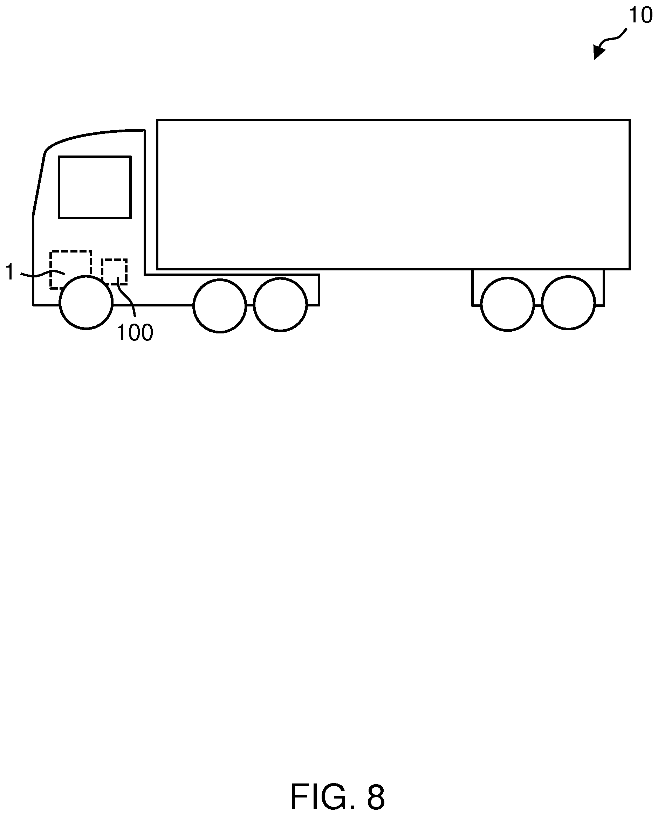

Figur 8 zeigt ein Kraftfahrzeug 10 mit einer Brennkraftmaschine 1, vorzugsweise einer Diesel-Brennkraftmaschine, sowie einer Vorrichtung 100 zum Zumischen eines flüssigen Reduktionsmittels zum Abgas der Brennkraftmaschine 1 gemäß einer Ausführungsform der Erfindung. Im vorliegenden Fall handelt es sich bei dem Kraftfahrzeug 10 dabei um ein Nutzfahrzeug in Form eines Lastkraftwagens. Weiterhin kann das Kraftfahrzeug 10 auch noch weitere - nicht näher dargestellte - Komponenten, darunter einen Abgastrakt, einen SCR-Katalysator 12, einen Tank zur Lagerung des Reduktionsmittels sowie entsprechende Versorgungsleitungen umfassen.

Die Erfindung soll nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Brennkraftmaschine
- 2: Abgastrakt
- 3: Dosiereinrichtung
- 4: Injektor
- 5: Schutzeinrichtung
- 6: Innenrohr
- 7: Außenrohr
- 8: Strömungswiderstand
- 9: Mehrlochblende
- 10: Kraftfahrzeug
- 11: Einschnürung
- 12: SCR-Katalysator
- 13: Verbindungsrohr
- 20: Drall-Erzeugungseinrichtung
- 20a: Erstes Ende der Drall-Erzeugungseinrichtung
- 20b: Zweites Ende der Drall-Erzeugungseinrichtung
- 21: Mantelfläche
- 22: Abgaseintrittsöffnung
- 23: Leitelement
- 23a: Erster Wandungsbereich des Leitelements
- 23a₁: Erster Längsabschnitt
- 23a₂: Zweiter Längsabschnitt
- 23a₃: Erster Querabschnitt
- 23a₄: Zweiter Querabschnitt
- 23b: Zweiter Wandungsbereich des Leitelements
- 24: Abstufung
- 100: Vorrichtung zum Zumischen eines flüssigen Reduktionsmittels zum Abgas einer Brennkraftmaschine
- b_{A}: Breite der Abgaseintrittsöffnung
- b_{L}: Breite des Leitelements
- l₁: Länge des ersten Längsabschnitts
- l₂: Länge des zweiten Längsabschnitts
- r₁: Abstand des ersten Längsabschnitt zur Längsachse
- r₂: Abstand des zweiten Längsabschnitt zur Längsachse
- L: Längsachse
- P: Punkt
- T: Tangente
- β: Winkel
- ΔI: Überstand

## Patentansprüche

1. Vorrichtung (100) zum Zumischen eines flüssigen Reduktionsmittels, vorzugsweise einer wässrigen Harnstofflösung, zum Abgas einer Brennkraftmaschine (1), umfassend
a) eine in einem Abgastrakt (2) der Brennkraftmaschine (1) angeordnete Dosiereinrichtung (3), die eingerichtet ist, mittels eines Injektors (4) einen Reduktionsmittelsprühstrahl zu erzeugen,
b) eine als Hohlzylinder um eine Längsachse (L) ausgebildete Drall-Erzeugungseinrichtung (20), die ein dem Injektor (4) zugewandtes erstes Ende (20a) und ein dem Injektor (4) abgewandtes zweites Ende (20b) aufweist,
wobei die Mantelfläche (21) der Drall-Erzeugungseinrichtung (20) mindestens
b1) eine sich im Wesentlichen in Längsrichtung erstreckende Abgaseintrittsöffnung (22) und
b2) ein angrenzend zu der Abgaseintrittsöffnung (22) angebrachtes und die Abgaseintrittsöffnung (22) im Inneren der Drall-Erzeugungseinrichtung (20) zumindest teilweise beabstandet überdeckendes Leitelement (23) zur Umlenkung eines Abgasstroms umfasst,
wobei das Leitelement (23) in Richtung des ersten Endes (20a) der Drall-Erzeugungseinrichtung (20) geschlossen und in Richtung des zweiten Endes (20b) der Drall-Erzeugungseinrichtung (20) geöffnet ist, und
das Leitelement (23) folgende Bereiche umfasst:
c1) einen ersten Wandungsbereich (23a), der die Abgaseintrittsöffnung (22) zumindest teilweise beabstandet überdeckt, und
c2) einen zweiten Wandungsbereich (23b), der den ersten Wandungsbereich (23a) in Richtung des ersten Endes (20a) der Drall-Erzeugungseinrichtung (20) mit der Mantelfläche (21) verbindet und dadurch das Leitelement (23) in dieser Richtung verschließt,
**dadurch gekennzeichnet, dass** der erste Wandungsbereich (23a)
d1) einen dem Injektor (4) zugewandten ersten Längsabschnitt (23a₁) und
d2) einen dem Injektor (4) abgewandten zweiten Längsabschnitt (23a₂) aufweist,
wobei der erste Längsabschnitt (23a₁) in radialer Richtung, vorzugsweise durch eine Abstufung (24) des ersten Wandungsbereichs (23a), einen größeren Abstand zur Längsachse (L) der Drall-Erzeugungseinrichtung (20) aufweist.

2. Vorrichtung (100) nach Anspruch 1, **dadurch gekennzeichnet, dass** das Leitelement (23) entlang einem Längsrand und einen dem ersten Endes (20a) der Drall-Erzeugungseinrichtung (20) zugewandten Querrand der Abgaseintrittsöffnung (22) mit der Mantelfläche (21) in Verbindung steht, um so bei einem Eintritt des Abgasstroms durch die Abgaseintrittsöffnung (22) ins Innere der Drall-Erzeugungseinrichtung (20) dort einen im Wesentlichen tangential und/oder in Richtung des zweiten Endes (20b) der Drall-Erzeugungseinrichtung (20) gerichteten Abgasstrom zu erzeugen.

3. Vorrichtung (100) nach einem der vorherigen Ansprüche, **dadurch gekennzeichnet, dass** der zweite Wandungsbereich (23b)
a) eine Krümmung aufweist und/oder
b) sich an den ersten Wandungsbereich (23a) in einem Winkel ungleich 90° anschließt.

4. Vorrichtung (100) nach einem der vorherigen Ansprüche, **dadurch gekennzeichnet, dass** eine in Längsrichtung gemessene Länge (l₁) des ersten Längsabschnitts (23a₁) kürzer als eine in Längsrichtung gemessene Länge (l₂) des zweiten Längsabschnitts (23a₂) ist.

5. Vorrichtung (100) nach einem der vorherigen Ansprüche, **dadurch gekennzeichnet, dass** das Leitelement (23) zwischen dem ersten und zweiten Längsabschnitt (23a₁, 23a₂)
a) zwei oder mehrere Abstufungen (24) umfasst und/oder
b) weitere Längsabschnitte umfasst, die in radialer Richtung einen Abstand zur Längsachse (L) der Drall-Erzeugungseinrichtung (20) aufweisen, der sich vom Abstand des ersten und zweiten Längsabschnitts (23a₁, 23a₂) unterscheidet.

6. Vorrichtung (100) nach einem der vorherigen Ansprüche, **dadurch gekennzeichnet, dass** der erste Wandungsbereich (23a)
a) einen gekrümmten ersten Querabschnitt (23a₃), der mit der Mantelfläche (21) in Verbindung steht und vorzugsweise an einem Randbereich der Abgaseintrittsöffnung (22) angeformt ist, sowie
b) einen an den ersten Querabschnitt (23a₃) anschließenden, im Wesentlichen geraden zweiten Querabschnitt (23a₄) umfasst.

7. Vorrichtung (100) nach Anspruch 6, **dadurch gekennzeichnet, dass** der zweite Querabschnitt (23a₄) des Leitelements (23) mit einer Tangente (T) der Mantelfläche (21), die durch einen Punkt (P) der dem Leitelement (23) zugehörigen Abgaseintrittsöffnung (22) und einer Ebene senkrecht zur Längsrichtung verläuft, einen Winkel (β) zwischen -10° und 30° einschließt.

8. Vorrichtung (100) nach einem der vorherigen Ansprüche, **dadurch gekennzeichnet, dass**
a) das Leitelement (23) die Abgaseintrittsöffnung (22) in radialer Richtung derart überdeckt, dass ausgehend von der Längsachse (L) der Drall-Erzeugungseinrichtung (20) in radialer Richtung keine direkte Sichtlinie durch die Abgaseintrittsöffnung (22) nach außen besteht und/oder
b) dass eine in Umfangsrichtung gemessene Breite (b_{L}) des Leitelements (23) größer als eine in Umfangsrichtung gemessene Breite (b_{A}) der zugehörigen Abgaseintrittsöffnung (22) ist, so dass das Leitelement (23) in Umfangsrichtung über die Abgaseintrittsöffnung (22) hinausragt.

9. Vorrichtung (100) nach einem der vorherigen Ansprüche, **gekennzeichnet durch** eine im Bereich des Injektors (4) angeordnete und als Hohlkörper, vorzugsweise als Kegelstumpf, ausgebildeten Schutzeinrichtung (5) zur Reduzierung einer Abgasströmung im Bereich des Reduktionsmittelsprühstrahls, deren Mantelfläche eine, vorzugsweise aus Rundlöchern gebildete, Perforierung aufweist.

10. Vorrichtung (100) nach einem der vorherigen Ansprüche, **gekennzeichnet durch**
a) ein an das zweite Ende (20b) der Drall-Erzeugungseinrichtung (20) anschließendes Innenrohr (6) mit vorzugsweise kreisrundem Querschnitt,
b) ein das Innenrohr (6) umgebendes Außenrohr (7) mit vorzugsweise kreisrundem Querschnitt und
c) mindestens einen zwischen dem Innen- und Außenrohr (6, 7) angeordneten Strömungswiderstand (8) zur Regulierung des Abgasdurchflusses in dem Bereich zwischen Innen und Außenrohr (6, 7).

11. Vorrichtung (100) nach Anspruch 10, **dadurch gekennzeichnet, dass** der Strömungswiderstand (8)
a) durch eine Verkleinerung des Leitungsquerschnitts zwischen Innen- und Außenrohr (6, 7), vorzugsweise durch eine Verjüngung des Außenrohrs (7), und/oder
b) durch eine, vorzugsweise ringförmige, Mehrlochblende (9) gebildet wird.

12. Vorrichtung (100) nach einem der Ansprüche 10 oder 11, **dadurch gekennzeichnet, dass**
a) das Außenrohr (7) in axialer Richtung eine längere Ausdehnung als das Innenrohr (6) aufweist und
b) in einem Bereich in dem das Außenrohr (7) das Innenrohr (6) nicht umgibt eine Einschnürung (11) aufweist.

13. Kraftfahrzeug (10), vorzugsweise Nutzfahrzeug, mit einer Brennkraftmaschine (1), vorzugsweise einer Diesel-Brennkraftmaschine, und einer Vorrichtung (100) zum Zumischen eines flüssigen Reduktionsmittels, vorzugsweise einer wässrigen Harnstofflösung, zum Abgas der Brennkraftmaschine (1) nach einem der vorherigen Ansprüche.

## Claims

1. Apparatus (100) for adding a liquid reducing agent, preferably an aqueous urea solution, to the exhaust gas of an internal combustion engine (1), comprising
a) a metering device (3) which is arranged in an exhaust tract (2) of the internal combustion engine (1) and is configured to generate a reducing-agent spray jet by means of an injector (4),
b) a swirl-generating device (20) which is formed as a hollow cylinder about a longitudinal axis (L) and which has a first end (20a) facing the injector (4) and a second end (20b) facing away from the injector (4),
wherein the lateral surface (21) of the swirl-generating device (20) comprises at least
b1) an exhaust-gas inlet opening (22) extending substantially in the longitudinal direction, and
b2) a guide element (23) which is provided adjoining the exhaust-gas inlet opening (22) and which at least partially covers, at a distance, the exhaust-gas inlet opening (22) in the interior of the swirl-generating device (20), for deflecting an exhaust-gas stream,
wherein the guide element (23) is closed in the direction of the first end (20a) of the swirl-generating device (20) and is open in the direction of the second end (20b) of the swirl-generating device (20), and
the guide element (23) comprises the following regions:
c1) a first wall region (23a) which at least partially covers, at a distance, the exhaust-gas inlet opening (22), and
c2) a second wall region (23b) which connects the first wall region (23a) to the lateral surface (21) in the direction of the first end (20a) of the swirl-generating device (20) and thereby closes off the guide element (23) in this direction,
**characterized in that** the first wall region (23a)
d1) has a first longitudinal portion (23a₁) facing the injector (4), and
d2) has a second longitudinal portion (23a₂) facing away from the injector (4),
wherein the first longitudinal portion (23a₁) has a greater distance from the longitudinal axis (L) of the swirl-generating device (20) in the radial direction, preferably by means of a step (24) of the first wall region (23a).

2. Apparatus (100) according to Claim 1, **characterized in that** the guide element (23) is connected to the lateral surface (21) along a longitudinal edge and along a transverse edge of the exhaust-gas inlet opening (22) facing the first end (20a) of the swirl-generating device (20), so as to generate, upon an entry of the exhaust-gas stream through the exhaust-gas inlet opening (22) into the interior of the swirl-generating device (20), an exhaust-gas stream directed there substantially tangentially and/or in the direction of the second end (20b) of the swirl-generating device (20).

3. Apparatus (100) according to any of the preceding claims, **characterized in that** the second wall region (23b)
a) has a curvature and/or
b) adjoins the first wall region (23a) at an angle other than 90°.

4. Apparatus (100) according to any of the preceding claims, **characterized in that** a length (l₁), measured in the longitudinal direction, of the first longitudinal portion (23a₁) is shorter than a length (l₂), measured in the longitudinal direction, of the second longitudinal portion (23a₂).

5. Apparatus (100) according to any of the preceding claims, **characterized in that** the guide element (23), between the first and second longitudinal portion (23a₁, 23a₂),
a) comprises two or more steps (24) and/or
b) comprises further longitudinal portions which have, in the radial direction, a distance from the longitudinal axis (L) of the swirl-generating device (20) that differs from the distance of the first and second longitudinal portion (23a₁, 23a₂).

6. Apparatus (100) according to any of the preceding claims, **characterized in that** the first wall region (23a) comprises
a) a curved first transverse portion (23a₃) which is connected to the lateral surface (21) and is preferably formed on an edge region of the exhaust-gas inlet opening (22), and
b) a substantially straight second transverse portion (23a₄) adjoining the first transverse portion (23a₃).

7. Apparatus (100) according to Claim 6, **characterized in that** the second transverse portion (23a₄) of the guide element (23) encloses an angle (β) of between -10° and 30° with a tangent (T) of the lateral surface (21) which runs through a point (P) of the exhaust-gas inlet opening (22) associated with the guide element (23) and in a plane perpendicular to the longitudinal direction.

8. Apparatus (100) according to any of the preceding claims, **characterized in that**
a) the guide element (23) covers the exhaust-gas inlet opening (22) in the radial direction in such a way that, proceeding from the longitudinal axis (L) of the swirl-generating device (20), there is no direct line of sight in the radial direction through the exhaust-gas inlet opening (22) to the outside, and/or
b) a width (b_{L}), measured in the circumferential direction, of the guide element (23) is greater than a width (b_{A}), measured in the circumferential direction, of the associated exhaust-gas inlet opening (22), such that the guide element (23) projects beyond the exhaust-gas inlet opening (22) in the circumferential direction.

9. Apparatus (100) according to any of the preceding claims, **characterized by** a protective device (5) which is arranged in the region of the injector (4) and is formed as a hollow body, preferably as a truncated cone, for reducing an exhaust-gas flow in the region of the reducing-agent spray jet, the lateral surface of which has a perforation preferably formed from round holes.

10. Apparatus (100) according to any of the preceding claims, **characterized by**
a) an inner tube (6) which adjoins the second end (20b) of the swirl-generating device (20) and preferably has a circular cross section,
b) an outer tube (7) which surrounds the inner tube (6) and preferably has a circular cross section, and
c) at least one flow resistance (8) which is arranged between the inner and outer tube (6, 7) for regulating the exhaust-gas throughflow in the region between the inner and outer tube (6, 7).

11. Apparatus (100) according to Claim 10, **characterized in that** the flow resistance (8) is formed
a) by a reduction of the conduit cross section between the inner and outer tube (6, 7), preferably by a tapering of the outer tube (7), and/or
b) by a preferably annular multi-hole orifice plate (9).

12. Apparatus (100) according to either of Claims 10 and 11, **characterized in that**
a) the outer tube (7) has a greater extent in the axial direction than the inner tube (6), and
b) has a constriction (11) in a region in which the outer tube (7) does not surround the inner tube (6).

13. Motor vehicle (10), preferably commercial vehicle, having an internal combustion engine (1), preferably a diesel internal combustion engine, and an apparatus (100) for adding a liquid reducing agent, preferably an aqueous urea solution, to the exhaust gas of the internal combustion engine (1) according to any of the preceding claims.

## Revendications

1. Dispositif (100) permettant d'ajouter un agent de réduction liquide, de préférence une solution aqueuse d'urée, au gaz d'échappement d'un moteur à combustion interne (1), comprenant
a) un dispositif de dosage (3) qui est disposé dans une ligne d'échappement (2) du moteur à combustion interne (1) et qui est conçu pour générer un jet de pulvérisation d'agent de réduction au moyen d'un injecteur (4),
b) un dispositif de génération de turbulence (20) qui est réalisé sous la forme d'un cylindre creux autour d'un axe longitudinal (L) et qui présente une première extrémité (20a) tournée vers l'injecteur (4) et une seconde extrémité (20b) opposée à l'injecteur (4),
la surface latérale (21) du dispositif de génération de turbulence (20) comprenant au moins
b1) une ouverture d'entrée de gaz d'échappement (22) s'étendant sensiblement dans la direction longitudinale, et
b2) un élément de guidage (23) qui est agencé de manière adjacente à l'ouverture d'entrée de gaz d'échappement (22) et qui recouvre à distance, au moins partiellement, l'ouverture d'entrée de gaz d'échappement (22) à l'intérieur du dispositif de génération de turbulence (20), pour dévier un flux de gaz d'échappement,
l'élément de guidage (23) étant fermé en direction de la première extrémité (20a) du dispositif de génération de turbulence (20) et ouvert en direction de la seconde extrémité (20b) du dispositif de génération de turbulence (20), et
l'élément de guidage (23) comprenant les zones suivantes :
c1) une première zone de paroi (23a) qui recouvre à distance, au moins partiellement, l'ouverture d'entrée de gaz d'échappement (22), et
c2) une seconde zone de paroi (23b) qui relie la première zone de paroi (23a) à la surface latérale (21) en direction de la première extrémité (20a) du dispositif de génération de turbulence (20) et ferme ainsi l'élément de guidage (23) dans cette direction,
**caractérisé en ce que** la première zone de paroi (23a)
d1) présente une première section longitudinale (23a₁) tournée vers l'injecteur (4), et
d2) présente une seconde section longitudinale (23a₂) opposée à l'injecteur (4),
la première section longitudinale (23a₁) présentant, dans la direction radiale, une distance plus grande par rapport à l'axe longitudinal (L) du dispositif de génération de turbulence (20), de préférence au moyen d'un gradin (24) de la première zone de paroi (23a).

2. Dispositif (100) selon la revendication 1, **caractérisé en ce que** l'élément de guidage (23) est en liaison avec la surface latérale (21) le long d'un bord longitudinal et le long d'un bord transversal de l'ouverture d'entrée de gaz d'échappement (22) tourné vers la première extrémité (20a) du dispositif de génération de turbulence (20), afin de générer ainsi, lors d'une entrée du flux de gaz d'échappement par l'ouverture d'entrée de gaz d'échappement (22) à l'intérieur du dispositif de génération de turbulence (20), un flux de gaz d'échappement dirigé à cet endroit sensiblement tangentiellement et/ou en direction de la seconde extrémité (20b) du dispositif de génération de turbulence (20).

3. Dispositif (100) selon l'une quelconque des revendications précédentes, **caractérisé en ce que** la seconde zone de paroi (23b)
a) présente une courbure et/ou
b) se raccorde à la première zone de paroi (23a) selon un angle différent de 90°.

4. Dispositif (100) selon l'une quelconque des revendications précédentes, **caractérisé en ce qu'**une longueur (l₁), mesurée dans la direction longitudinale, de la première section longitudinale (23a₁) est plus courte qu'une longueur (l₂), mesurée dans la direction longitudinale, de la seconde section longitudinale (23a₂).

5. Dispositif (100) selon l'une quelconque des revendications précédentes, **caractérisé en ce que** l'élément de guidage (23), entre la première et la seconde section longitudinale (23a₁, 23a₂),
a) comprend deux gradins (24) ou plus et/ou
b) comprend d'autres sections longitudinales qui présentent, dans la direction radiale, une distance par rapport à l'axe longitudinal (L) du dispositif de génération de turbulence (20) qui diffère de la distance de la première et de la seconde section longitudinale (23a₁, 23a₂).

6. Dispositif (100) selon l'une quelconque des revendications précédentes, **caractérisé en ce que** la première zone de paroi (23a) comprend
a) une première section transversale courbée (23a₃) qui est en liaison avec la surface latérale (21) et qui est de préférence formée sur une zone de bord de l'ouverture d'entrée de gaz d'échappement (22), ainsi que
b) une seconde section transversale (23a₄) sensiblement droite se raccordant à la première section transversale (23a₃).

7. Dispositif (100) selon la revendication 6, **caractérisé en ce que** la seconde section transversale (23a₄) de l'élément de guidage (23) forme un angle (β) compris entre -10° et 30° avec une tangente (T) de la surface latérale (21) qui passe par un point (P) de l'ouverture d'entrée de gaz d'échappement (22) associée à l'élément de guidage (23) et dans un plan perpendiculaire à la direction longitudinale.

8. Dispositif (100) selon l'une quelconque des revendications précédentes, **caractérisé en ce que**
a) l'élément de guidage (23) recouvre l'ouverture d'entrée de gaz d'échappement (22) dans la direction radiale de telle sorte que, à partir de l'axe longitudinal (L) du dispositif de génération de turbulence (20), il n'existe, dans la direction radiale, aucune ligne de visée directe vers l'extérieur à travers l'ouverture d'entrée de gaz d'échappement (22), et/ou
b) une largeur (b_{L}), mesurée dans la direction circonférentielle, de l'élément de guidage (23) est plus grande qu'une largeur (b_{A}), mesurée dans la direction circonférentielle, de l'ouverture d'entrée de gaz d'échappement (22) associée, de sorte que l'élément de guidage (23) dépasse l'ouverture d'entrée de gaz d'échappement (22) dans la direction circonférentielle.

9. Dispositif (100) selon l'une quelconque des revendications précédentes, **caractérisé par** un dispositif de protection (5) qui est disposé dans la zone de l'injecteur (4) et qui est réalisé sous la forme d'un corps creux, de préférence sous la forme d'un tronc de cône, pour réduire un écoulement de gaz d'échappement dans la zone du jet de pulvérisation d'agent de réduction, dont la surface latérale présente une perforation de préférence formée de trous ronds.

10. Dispositif (100) selon l'une quelconque des revendications précédentes, **caractérisé par**
a) un tube intérieur (6) qui se raccorde à la seconde extrémité (20b) du dispositif de génération de turbulence (20) et qui présente de préférence une section transversale circulaire,
b) un tube extérieur (7) qui entoure le tube intérieur (6) et qui présente de préférence une section transversale circulaire, et
c) au moins une résistance à l'écoulement (8) qui est disposée entre le tube intérieur et le tube extérieur (6, 7) pour réguler le débit de gaz d'échappement dans la zone située entre le tube intérieur et le tube extérieur (6, 7).

11. Dispositif (100) selon la revendication 10, **caractérisé en ce que** la résistance à l'écoulement (8) est formée
a) par une réduction de la section du conduit entre le tube intérieur et le tube extérieur (6, 7), de préférence par un rétrécissement du tube extérieur (7), et/ou
b) par un diaphragme à trous multiples (9) de préférence annulaire.

12. Dispositif (100) selon l'une des revendications 10 ou 11, **caractérisé en ce que**
a) le tube extérieur (7) présente, dans la direction axiale, une étendue plus longue que le tube intérieur (6), et
b) présente un étranglement (11) dans une zone dans laquelle le tube extérieur (7) n'entoure pas le tube intérieur (6).

13. Véhicule automobile (10), de préférence véhicule utilitaire, comportant un moteur à combustion interne (1), de préférence un moteur à combustion interne diesel, et un dispositif (100) permettant d'ajouter un agent de réduction liquide, de préférence une solution aqueuse d'urée, au gaz d'échappement du moteur à combustion interne (1) selon l'une quelconque des revendications précédentes.
